(19) Europäisches Patentamt
European Patent Office
Office européen des brevets

(11) **EP 4 524 964 A1**

(12) **EUROPEAN PATENT APPLICATION**

(43) Date of publication:
**19.03.2025 Bulletin 2025/12**

(21) Application number: **23197101.1**

(22) Date of filing: **13.09.2023**

(51) International Patent Classification (IPC):
**G11B 27/10** $^{(2006.01)}$    **G06T 7/593** $^{(2017.01)}$
**G06T 7/73** $^{(2017.01)}$

(52) Cooperative Patent Classification (CPC):
**G11B 27/10; G06T 7/593; G06T 7/73**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **VAREKAMP, Christiaan**
**5656AG Eindhoven (NL)**

(74) Representative: **Philips Intellectual Property & Standards**
**High Tech Campus 52**
**5656 AG Eindhoven (NL)**

(54) **TEMPORALLY SYNCHRONIZING VIDEOS**

(57)    A method of temporally synchronizing a first video and a second video of a scene. The method comprises identifying positions of one or more moving features in a first frame of the first video and identifying positions of said moving features in each of two or more frames of the second video. Epipolar lines for the two or more frames of the second video are generated, each corresponding to the position of a moving feature in the first frame of the first video. For each of the two or more frames of the second video, distances between the positions of the moving features in the second video's frame and the corresponding epipolar lines are determined and a temporal offset between the first video and the second video can thus be determined based on the determined distances.

402 — Identify the positions of moving features in a first frame of a first video

404 — Identify the positions of the moving features in two or more frames of a second video

406 — Generating an epipolar line for the frames of the second video corresponding to the position of the moving feature

408 — Determine the distances between the moving feature in the frames of the second video and the epipolar line

410 — Determine a temporal offset between the first video and the second video

Fig.4

EP 4 524 964 A1

**Description**

FIELD OF THE INVENTION

The invention relates to the field of video synchronization. In particular, the invention relates to the field of temporal synchronization.

BACKGROUND OF THE INVENTION

Temporally synchronizing videos means aligning their playback timelines so that they start and progress simultaneously. This can be useful in multi-view/immersive video applications where the videos obtained from the different cameras are used to synthesize a novel view.

One approach to temporal synchronization involves manual synchronization of the videos. One approach is to manually synchronize the videos by visually comparing them and adjusting their starting points. If the videos contain audio, distinct sounds can be used to synchronize them. However, in this case, temporally synchronized audio is also a requirement.

Most current multi-camera setups have an external electronic triggering which uses an electric pulse for temporal synchronization. For example, genlock (generator locking) is a method that involves using a dedicated sync signal generator to synchronize the frame rate and timing of multiple cameras.

Timecode is a synchronized clock signal that provides a common time reference for all cameras. By connecting all cameras to a common sync signal generator and using timecode, all cameras can begin recording frames in sync. This method requires specialized equipment.

As such, most current multi-camera setups require cables for synchronized video captures. This is a limitation for market adoption. Moreover, multi-view/immersive video capture can now be performed using existing consumer devices such as smartphones. Temporally synchronizing videos from different consumer devices with known methods can be impractical (e.g., having to connect the devices with cables) and/or time-consuming (e.g., manually synchronizing the videos).

Thus, there is a need for an improved method of temporally synchronizing videos.

SUMMARY OF THE INVENTION

The invention is defined by the claims.

According to examples in accordance with an aspect of the invention, there is provided a method of temporally synchronizing a first video and a second video of a scene, wherein the first and second videos are captured from a first camera pose and a second, different, camera pose respectively, the method comprising:

identifying positions of one or more moving features in a first frame of the first video;
identifying positions of said moving features in each of two or more frames of the second video;
generating epipolar lines for the two or more frames of the second video corresponding to the positions of the moving features in the first frame of the first video using the first and second camera poses;
for each of the two or more frames of the second video, determining distances between the positions of the moving features in the second video's frame and the corresponding epipolar lines; and
determining a temporal offset between the first video and the second video based on the determined distances.

Video synchronization is important, especially in 2D to 3D applications where multiple video captures are used to synthesize a novel view. Currently, most commercial video synchronization systems use physical cables between cameras to synchronize the video outputs. However, these systems can be cumbersome. Additionally, it is not practical to add said cables to existing devices with multiple cameras (e.g., smartphones).

Thus, it is proposed to use epipolar constraints and the temporal nature of video to synchronize a first and second video. Assuming two frames are captured at exactly the same time from different camera positions, it is known that a feature found in one of the frames will be constrained, in the other frame, to being positioned on a straight (epipolar) line. The geometry of the epipolar line on the other frame will depend on the camera positions.

Thus, a (first) frame of the first video can be taken as a reference point. A feature which is moving over time (i.e., a moving feature) can be identified in the first frame and an epipolar line for the second video can be generated (assuming fixed relative positions between the cameras). The same moving feature can thus be identified in the frames of the second video and the position of the feature in these frames can be compared to the position of the epipolar line. The determined distances between the feature positions and the epipolar line can thus be used to determine a temporal offset between the videos.

For example, the frame with the shortest distance between the feature and the epipolar line can be assumed to be the temporally closest frame (i.e., a best fit frame) to the first frame of the first video and thus the first video and the second video can be temporally synchronized by adjusting the first or second video by the temporal offset between the best fit frame of the second video and the first frame of the first video.

Whether a feature is moving or not can be determined by, for example, determining the position of the feature in the first or second video over time. Alternatively, the steps above can be performed for any feature, assuming it is a moving feature. If more than one frame has the same shortest distance between the feature and the epipolar line, then this feature is not moving and a different feature can be chosen.

It is noted that a moving feature is defined as a feature of which the position moves over time in the second video (i.e., not just depth changing relative to the camera capturing the first video). However, a moving feature cannot move only along the epipolar line. In practice, it is highly unlikely that a feature will only move along the epipolar line.

In practice, multiple features can be used simultaneously to increase the likelihood that at least one feature will be a moving feature.

The method may further comprise identifying positions of one or more moving features in a second frame of the first video, generating epipolar lines for the two or more frames of the second video corresponding to the position of the moving features identified in the second frame of the first video using the first and second camera poses and, for each of the two or more frames of the second video, determining distances between the positions of the moving features in the second video's frame and the corresponding epipolar lines, wherein determining the temporal offset is further based on the distances between the positions of the moving features in the second video's frames and the corresponding epipolar lines.

Using two (or more) frames from the first video can provide a temporally windowed metric which increases the likelihood that the feature used will be a moving feature.

The method may further comprise identifying positions of one or more moving features in each of two or more frames of a third video of the scene taken at a third camera pose, generating epipolar lines for the two or more frames of the third video corresponding to the positions of the moving features in the first frame of the first video using the first and third camera poses, generating epipolar lines for the two or more frames of the third video corresponding to the positions of the moving features in a frame of the second video using the second and third camera poses, for each of the two or more frames of the second video, determining distances between the positions of the moving features in the third video's frame and the corresponding epipolar line generated from the first frame of the first video, for each of the two or more frames of the second video, determining distances between the positions of the moving features in the third video's frame and the corresponding epipolar line generated from the frame of the second video, determining a second temporal offset between the first video and the third video based on the determined distances between the positions of the moving features in the third video's frames and the corresponding epipolar line generated from the first frame of the first video and determining a third temporal offset between the second video and the third video based on the determined distances between the positions of the moving features in the third video's frames and the corresponding epipolar line generated from the frame of the second video.

Thus, a third video can be temporally synchronized to the other two by determining the temporal offset corresponding to the first and/or second videos.

Determining the temporal offset may comprise determining a temporally closest frame of the second video, with respect to the first frame of the first video, based on the frame of the second video with the shortest sum of distances between the positions of the moving features in the second video's frames and the corresponding epipolar lines.

The method may further comprise identifying a temporally neighboring frame of the second video, with respect to the temporally closest frame, having at least one identified moving feature positioned on the other side of the corresponding epipolar line with respect to the identified moving feature in the temporally closest frame, and determining a sub-frame offset between the temporally closest frame of the second video and the first frame of the first video based on the magnitude of the distances corresponding to the temporally closest frame and the temporally neighboring frame.

As the exposure time of the cameras is usually much shorter than the frame duration, it is likely that there is a sub-frame offset (shorter than a frame) between the temporally closest frame of the second video and the first frame of the first video. This time difference can be determined by identifying a temporally neighboring frame of the temporally closest frame which has the feature on the opposite side of the epipolar line. The differences in the sign and magnitude of the distances between the temporally closest and temporally neighboring frames can be used to determine the magnitude of the sub-frame time difference.

The method may further comprise adapting one or more of a first camera, used to obtain the first video, and a second camera, used to obtain the second video, based on the sub-frame offset such that the videos captured by the first camera and the second camera are temporally synchronized.

Knowledge of the sub-frame time difference can be used to adapt (i.e., speed up or slow down) the cameras (e.g., if the video capture is live).

The method may further comprise determining the first camera pose and the second camera pose within a world coordinate system based on one or more frames from the first video and one or more frames from the second video.

The camera poses can be calibrated, for example, by using calibration patterns of known geometry in the scene. Alternatively, or additionally, the first and second videos can be fed into a structure from motion (SfM) algorithm to calculate the respective camera poses relative to each other.

In other cases, it could be assumed that the first and second camera poses are known relative to each other (e.g., if the first and second cameras are placed at known poses).

The invention also provides a method for temporally synchronizing a first video of a scene captured by a first smartphone at a first camera pose and a second video of the scene captured by a second smartphone at a second camera pose, the method comprising:

determining whether the first and second videos were captured within a time threshold of each other; and
based on the first and second videos being captured within the time threshold, performing all of the steps according to the afore-mentioned method.

The time threshold may be duration of the first and/or second video. Thus, if the first (or second) video was captured within the duration of the second (or first) video, it will be known that the first and second videos coincide in time.

Determining whether the first and second videos were captured within the time threshold means determining whether the first and second videos at least partially coincide in time (i.e., at least part of the first video was taken at the same time as part of the second video).

The invention also provides a computer program carrier comprising computer program code which, when executed on a computer, causes the computer to perform all of the steps according to the afore-mentioned method.

Of course, it will be appreciated that the computer program code can be executed by a processor as described below.

The invention also provides a system for temporally synchronizing a first video and a second video of a scene, wherein the first and second videos are captured from a first camera pose and a second, different, camera pose respectively, the system comprising a processor configured to:

identify positions of one or more moving features in a first frame of the first video;
identify positions of said moving features in each of two or more frames of the second video;
generate epipolar lines for the two or more frames of the second video corresponding to the positions of the moving features in the first frame of the first video using the first and second camera poses;
for each of the two or more frames of the second video, determine distances between the positions of the moving features in the second video's frame and the corresponding epipolar lines; and
determine a temporal offset between the first video and the second video based on the determined distances.

The processor may be further configured to identify positions of one or more moving features in a second frame of the first video, generate epipolar lines for the two or more frames of the second video corresponding to the position of the moving features identified in the second frame of the first video using the first and second camera poses and, for each of the two or more frames of the second video, determine distances between the positions of the moving features in the second video's frame and the corresponding epipolar lines, wherein the processor is further configured to determine the temporal offset based on the distances between the positions of the moving features in the second video's frames and the corresponding epipolar lines.

The processor may be further configured to identify positions of one or more moving features in each of two or more frames of a third video of the scene taken at a third camera pose, generate epipolar lines for the two or more frames of the third video corresponding to the positions of the moving features in the first frame of the first video using the first and third camera poses, generate epipolar lines for the two or more frames of the third video corresponding to the positions of the moving features in a frame of the second video using the second and third camera poses, for each of the two or more frames of the second video, determine distances between the positions of the moving features in the third video's frame and the corresponding epipolar line generated from the first frame of the first video, for each of the two or more frames of the second video, determine distances between the positions of the moving features in the third video's frame and the corresponding epipolar line generated from the frame of the second video, determine a second temporal offset between the first video and the third video based on the determined distances between the positions of the moving features in the third video's frames and the corresponding epipolar line generated from the first frame of the first video and determine a third temporal offset between the second video and the third video based on the determined distances between the positions of the moving features in the third video's frames and the corresponding epipolar line generated from the frame of the second video.

The processor may be configured to determine the temporal offset by determining a temporally closest frame of the second video, with respect to the first frame of the first video, based on the frame of the second video with the shortest sum of distances between the positions of the moving features in the second video's frames and the corresponding epipolar lines.

The processor may be further configured to identify a temporally neighboring frame of the second video, with respect to the temporally closest frame, having at least one identified moving feature positioned on the other side of the corresponding epipolar line with respect to the identified moving feature in the temporally closest frame and determine a sub-frame offset between the temporally closest frame of the second video and the first frame of the first video based on the magnitude of the distances corresponding to the temporally closest frame and the temporally neighboring frame.

The processor may be further configured to adapt one or more of a first camera, used to obtain the first video, and a second camera, used to obtain the second video, based on the sub-frame offset such that the videos captured by the first camera and the second camera are temporally synchronized.

The processor may be further configured to determine the first camera pose and the second camera pose within a world coordinate system based on one or more frames from the first video and one or more frames from the second video.

The invention also provides a system for temporally synchronizing a first video of a scene captured by a first smartphone at a first camera pose and a second video of the scene captured by a second smartphone at a second camera pose, the system comprising a processor configured to:

determine whether the first and second videos were captured within a time threshold of each other; and
based on the first and second videos being captured within the time threshold, perform all of the afore-mentioned steps.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates the epipolar constraint;
Fig. 2 illustrates a first frame of a first video and two frames of a second video;
Fig. 3 shows two temporally neighboring frames of a second video; and
Fig. 4 shows a method of temporally synchronizing a first video and a second video of a scene.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method of temporally synchronizing a first video and a second video of a scene. The method comprises identifying positions of one or more moving features in a first frame of the first video and identifying positions of said moving features in each of two or more frames of the second video. Epipolar lines for the two or more frames of the second video are generated, each corresponding to the position of a moving feature in the first frame of the first video. For each of the two or more frames of the second video, distances between the positions of the moving features in the second video's frame and the corresponding epipolar lines are determined and a temporal offset between the first video and the second video can thus be determined based on the determined distances.

The proposed video synchronization method uses the fact that the cameras view the same scene but from a different perspective. In this case, the so-called epipolar constraint holds which means that, assuming an ideal pinhole camera model (no lens distortion), an image point in one view will map to a straight line in other views when varying only depth. Note that the ideal pinhole camera model may be assumed once the images are undistorted using, assumed known, intrinsic camera parameters. Given two different perspective images of one and the same point, each must lie exactly on the epipolar line as indicated by the other point (assuming perfect camera pose calibration). Deviations from the line can then only be explained by a temporal mismatch of the videos. This realization reduces the synchronization problem to a one-dimensional problem to be solved by minimizing the shortest distance of a point to a line, (e.g., summed over multiple feature points) while applying a relative shift to the videos.

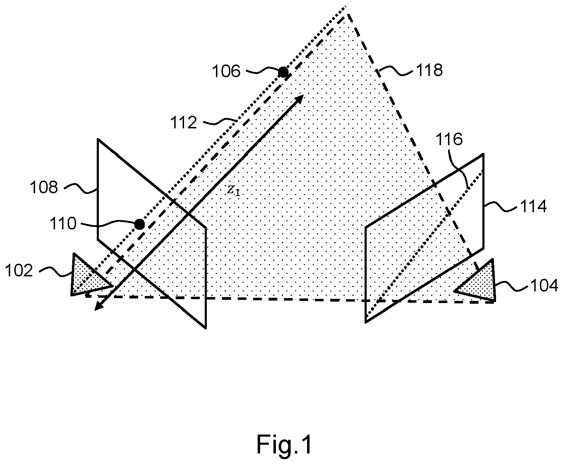

Fig. 1 illustrates the epipolar constraint. Two cameras 102 and 104 are used to capture a scene which includes 3D feature point 106. This 3D feature point 106 appears as 2D (projected) feature point 110 with coordinates $(u_1, v_1)$ in the image plane 108 for the first camera 102. However, from the perspective of the first camera 102, the depth $z_1$ at the time a first frame is captured $t_1$ is not known. Thus, in a 3D common global coordinate system, the imaged feature 110 can be described as a line 112 in 3D space which only varies in depth relative to the first camera 102.

Assuming that the images obtained from both cameras 102 and 104 can be undistorted (meaning that the effect of lens distortion can be removed, and that each camera has a known focal length and principle point, both expressed in pixel coordinates), and further assuming known camera poses for the first camera 102 and the second camera 104 (relative to the common world coordinate system), the line 112 can be projected onto the image plane 114 of the second camera 104 to derive a straight epipolar line 116 in the image plane 114 of the second camera 104. Thus, without any image information from the second camera 104, it is known that feature 106 will appear somewhere on the epipolar line 116 at time $t_1$. This limitation of the position of feature 106 on the image plane 114 at time $t_1$ is due to the epipolar constraint.

Re-projection from the first camera 102 followed by a pose change and projection to the second camera 104 is given by the following equation:

$$ s \begin{bmatrix} u_2 \\ v_2 \\ z_2 \end{bmatrix} = P V_2 M_1 Q \begin{bmatrix} z_1 u_1 \\ z_1 v_1 \\ z_1 \\ 1 \end{bmatrix} \qquad (1) $$

where Q is the so called 4×4 un-projection matrix that projects the 4× 1 homogeneous input coordinate consisting of image coordinates and at a given depth $z_1$ to a 3D camera coordinate system for the first camera, $M_1$ is the so called model matrix for the first camera that transforms the 3D homogeneous coordinate from the 3D camera coordinate system for the first camera to the common world coordinate system, $V_2$ is the so called view matrix for the second camera (which is the inverse of the model matrix $M_2$ for the second camera) which transforms 3D world coordinates to a 3D camera coordinate system for the second camera, and $P$ is the projection matrix that projects the 3D point to 2D image coordinates. Homogeneous scale factor s must be divided out to obtain the image coordinates.

The un-projection matrix $Q$ can be derived from intrinsic parameters of the first camera and projection matrix $P$ can be derived from intrinsic parameters of the second camera. The model matrix $M_1$ and the view matrix $V_2$ can be derived from extrinsic parameters of the first and second cameras respectively. The extrinsic and intrinsic parameters of a camera can be found using known camera calibration methods.

Thus, when varying an unknown depth $z_1$ relative to the first camera 102, the pixel coordinates $(u_2, v_2)$ in the imaging plane for the second camera 104 will form the straight epipolar line 116.

Existing Structure-from-Motion (SfM) frameworks such as Alice Vision and COLMAP can be used to determine the relative camera poses (orientation and translation) of multiple cameras filming a scene as well as identifying features, such as feature 110, in the images taken from the cameras. Note that existing SfM frameworks will remove features that are not consistent with the 3D estimation problem. Hence, moving features will be removed. It is therefore useful to use a separate feature detection method (e.g., scale-invariant feature transform, SIFT) and separate correspondence estimation methods (e.g., as incorporated in AliceVision and COLMAP) as separate modules. Alternatively, these algorithms can be run stand-alone using the OpenCV software.

An issue with temporal synchronization of videos is that the time at which each video is taken will be relative to distinct reference times. For example, the first frame of each video may correspond to the time of an internal clock in each camera. However, said clocks can often give times which significantly differ from each other. For example, a one second difference in these times would correspond to a 30 frame difference between the videos for videos taken at 30 frames per second. Thus, the temporal synchronization method described herein aims to find the temporal offset between the videos such that they can be temporally synchronized.

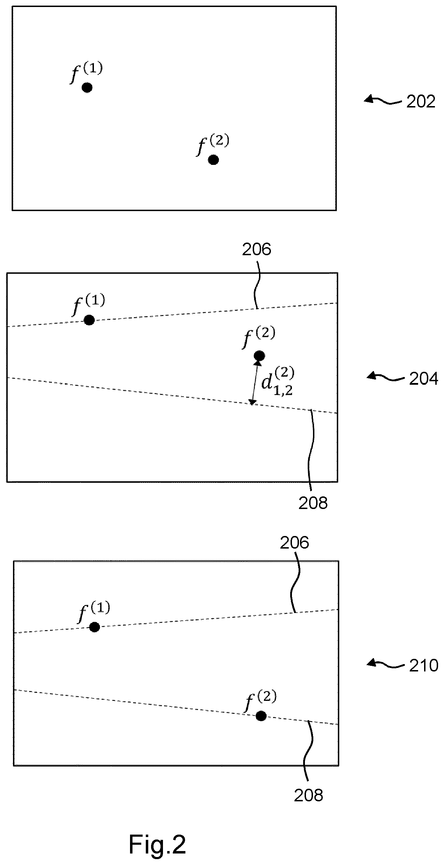

Fig. 2 illustrates a first frame 202 of a first video and two frames 204 and 210 of a second video. Let $I_1(t_1)$ denote the first frame 202 of a first video taken at time $t_1$ using a first camera. Let $I_2(t_2), \cdots, I_2(t_2 + (N-1)\Delta_2)$ denote N consecutive frames from a second video taken with a second camera at times $t_2, \cdots, t_2 + (N-1)\Delta_2$. In this case, a constant frame rate for the second video is assumed and $\Delta_2$ is the time between the frames of the second video. Two frames 204 and 210 from the second video are shown in Fig. 2. Frame 204 was taken at time $t_2$ and frame 210 was taken at time $t_2 + \Delta_2$.

Temporal synchronization can begin by using a "reference" frame from each video and finding the temporal offset between said reference frames. In this example, frame 202 from the first video and frame 204 of the second video can be used as the reference frames. Thus, the aim is to find the temporal offset $\varepsilon_{1,2}$ such that $t_1 = t_2 + \varepsilon_{1,2}$. It will be appreciated that the so-called reference frames can be chosen arbitrarily. However, it is preferable to choose frames which were captured at similar times if possible (e.g., by comparing the timestamps corresponding to the videos).

Let $\mathbf{f}_1^{(i)}(u_1, v_1, t_1)$ and $\mathbf{f}_2^{(i)}(u_2, v_2, t_2 + (k-1)\Delta_2)$ denote two corresponding sets of features in the first frame 202 of the first video and the kth frame of the second video respectively, each set having i features. For the first video there are only features given in a single frame, but correspondences with the features in the frames of the second video can be calculated for all $k = 1 ... N$ frames. Note that structure from motion (SfM) tools from toolboxes such as AliceVision or COLMAP can be used to detect features and feature correspondences.

The synchronization problem is now to determine which one of the $k = 1 ... N$ frames of the second video lies closest in time to $I_1(t_1)$. Using epipolar geometry, a feature $\mathbf{f}_1^{(i)}(u_1, v_1, t_1)$ maps to a straight epipolar line $l_{1,2}^{(i)}$ in the frames for the second video when varying depth as discussed above. Moreover, assuming a static scene, since features $\mathbf{f}_1^{(i)}(u_1, v_1, t_1)$ and $\mathbf{f}_2^{(i)}(u_2, v_2, t_2 + (k-1)\Delta_2)$ correspond to one and the same 3D point the image position $(u_1, v_1)$ of $\mathbf{f}_1^{(i)}(u_1, v_1, t_1)$ must fall exactly on that line. This analysis holds for a static scene assumption and all features i. Note that the set of features i can vary depending on the frames of the second video for which the feature correspondence was calculated. However, if videos are not synchronized then feature points that move will result in a deviation from the corresponding epipolar line.

For example, feature $f^{(1)}$ shown in frames 202, 204 and 210 is a static feature. The epipolar line 206 of the static feature $f^{(1)}$ from frame 202 can be derived and overlayed on frames 204 and 210 of the second video. As shown in Fig. 2, feature $f^{(1)}$ lies on the corresponding epipolar line 206 on both frames 204 and 210 of the second video because it is a static feature.

However, feature $f^{(2)}$ is a moving feature. Thus, the moving feature $f^{(2)}$ will only lie on the corresponding epipolar line 208 on a frame of the second video which was taken at the same time as the first frame 202 of the first video. In Fig. 2, the moving feature $f^{(2)}$ is positioned a distance $d_{1,2}^{(2)}$ from the epipolar line 208 in frame 204 but is positioned on the epipolar line 208 in frame 210. This means that $t_1 = t_2 + \varepsilon_{1,2} = t_2 + \Delta_2$. Thus, the temporal offset between the first and second video is $\varepsilon_{1,2} = \Delta_2$.

The distance between a feature and the corresponding epipolar line is the distance from the feature to the closest point on the epipolar line to the feature.

Here, a moving feature point is a feature point which has a non-zero motion component in the direction that lies orthogonal to the corresponding epipolar line. Returning to Fig. 1, this means the 3D feature point 106 in the real scene has a non-zero motion vector component in the direction that lies orthogonal to the corresponding epipolar plane 118. If the feature 106 only moves within the corresponding epipolar plane 118, it will appear as only moving along the epipolar line 116 from the perspective of the second camera 104. In this case, it would not be possible to tell which of the frames of the second camera is a best fit. However, in practice, it is very unlikely that the movement of an object will be constrained to such a plane. As such, a vast majority of objects which move throughout the scene would be moving features as defined herein.

Of course, it will be appreciated that a moving feature may only lie exactly on the epipolar line when the temporal offset is a multiple of the frame duration $\Delta_2$. In other cases, the temporal offset can be approximated based on a best fit frame of the second video which has the moving feature closest to the epipolar line.

The temporal offset provides the temporal shift needed to synchronize the videos. In other words, to determine the temporal shift that needs to be applied to the second video (or the first video) to bring both videos in sync, the deviations from epipolar geometry should be minimal. The following formula can be used to find the best fit frame:

$$k_{\mathrm{opt}} = \arg \min_k \left( \sum_{i=1}^{N_{\mathrm{features}}} \left\| d_{1,2}^{(i,k)} \right\|_2 \right) \qquad (2)$$

where $k_{opt}$ is the best fit frame from the second video and $d_{1,2}^{(i,k)}$ denotes the distance of feature point i in frame k, of the second video, to the epipolar line as predicted by the corresponding feature in the first frame. As such, the temporal offset can be approximated using the best fit frame of the second video $\varepsilon_{1,2} \sim (k_{opt} - 1)\Delta_2$.

It is noted that a single moving feature can be used to temporally synchronize the videos. However, in practice, it is preferable to use a set of features. Some of these features may be static, whereas some may be moving. The larger the set of features, the more likely it is to find many moving features.

In the examples above, only a single frame of the first video has been used. However, a temporally windowed approach can be used. Instead of taking a single frame from the first video, a sequence of $M$ (temporally adjacent) frames (e.g., five frames) could be taken from the first video. Thus, equation (2) can be adapted as follows:

$$k_{\text{opt}} = \arg\min_{k} \left( \sum_{j=1}^{M} \sum_{i=1}^{N_{\text{features}}} \left\| d_{1,2}^{(i,k,j)} \right\|_2 \right) \tag{3}$$

where $d_{1,2}^{(i,k,j)}$ denotes the distance of feature point i in frame k, of the second video, to the epipolar line as predicted by the corresponding feature in frame j of the first video. This would base the prediction of the best fit frame on more data with a higher likelihood that feature motion occurs.

It is noted that the concepts described herein can generalize to more than two cameras. The preferred approach may be to first synchronize two of the videos mutually. A third video can then be fitted against the two synchronized videos instead of one video. Similarly, a fourth video can be fitted against the three synchronized videos and so forth. This can result in a more robust and/or accurate synchronization. As a final step, a global search algorithm may consider shifting each video in time relative to all other videos thereby minimizing a metric that considers epipolar constraints for all videos and features. The global search algorithm may iteratively refine the offset for a given video taking into account all errors between said video and other videos, and vice versa.

Typically, cameras will have exposure times that are shorter than the frame duration (i.e., the time between frames). Thus, it will be likely that a non-zero residual distance remains between a feature point and the closest point on the epipolar line for the best fit frame. When features are tracked over time, sub-frame synchronization of the video can be performed based on the size and sign of the distances.

In other words, the temporal offset will not always be a multiple of the time between frames. However, as described above, the temporal offset can be approximated as a multiple of the frame duration by finding the best fit frame of the other video(s). A sub-frame offset can further be determined based on the size and sign of the distances found in the best-fit frame and other temporally neighboring frames (i.e., the next, and/or previous, frames).

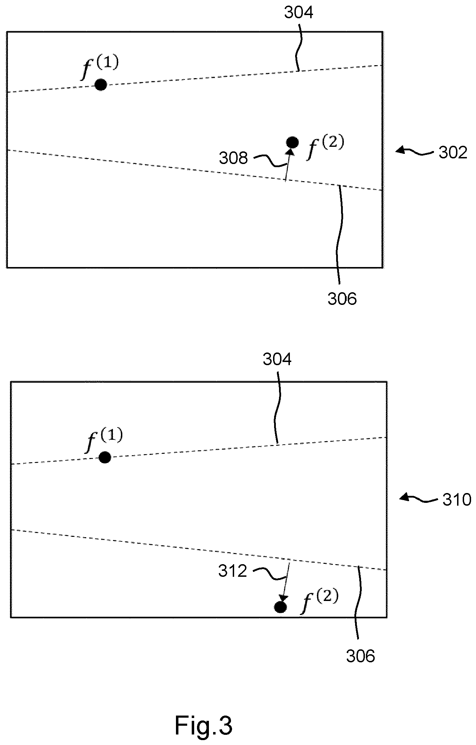

Fig. 3 shows two temporally neighboring frames 302 and 310 of a second video. A first epipolar line 304 is shown for the static feature $f^{(1)}$ in both frames 302 and 310. As would be expected for a static feature, feature $f^{(1)}$ lies on the epipolar line 304 for both frames.

However, in this example, moving feature $f^{(2)}$ does not lie on the corresponding epipolar line 306 in either frame 302 or 310. However, it can be observed that feature $f^{(2)}$ "crosses" the epipolar line 306 between frame 302 and frame 310. Thus, it can be surmised that the temporal offset is somewhere between the time at which frame 302 was taken and the time at which frame 310 was taken.

In this case, the distances for the two consecutive frames 302 and 310 are equally sized but have opposite signs. This indicates that the first frame of the first video (not shown), from which the epipolar lines 304 and 306 were derived, is situated between the capture times for frames 302 and 304. As such, in this example, the sub-frame offset could be half of the frame duration.

Assuming a relatively short frame duration, and a constant speed (relative to the image plane of the second camera) for the feature (between frames 302 and 304), a more accurate sub-frame offset may be determined. The sub-frame offset can be derived from the relative sizes of distances 308 and 312 divided by the sum of the distances. This holds under the assumption of constant feature motion. A more accurate estimate of the sub-frame offset could be derived by also using the feature positions in various consecutive frames before and/or after the frames in which the features cross the epipolar line.

Knowledge of the sub-frame offset between two videos could be used to speed-up or slow-down the cameras such that both cameras start to run in sync without the need for an external trigger cable. For example, the framerate of a camera could be slowed down or sped up (e.g., by 0.1 fps) until the most current frames from both cameras are temporally synchronized.

During large events (e.g., concerts), it has now become common for people to take videos of said events with their smartphone and upload them online. It has been realized that these videos can now be used to generate an immersive video where the viewer can choose their viewpoint. In order to achieve this, the uploaded videos have to undergo calibration, to find their relative camera poses, and temporal synchronization of the videos.

First, an initial temporal check can be performed to determine whether the videos at least partially coincide in time. This can be achieved, for example, by comparing the timestamps usually provided with the videos. The timestamps are not precise enough to temporally synchronize the videos for the purpose of 3D reconstruction, but they can provide an indication of when the video was taken. If they do coincide in time, extrinsic calibration can be performed using, for example, structure from motion algorithms. Alternatively, known calibration markers (i.e., markers of known geometry) that are present, or placed in the scene of the event can be captured in the various videos and thus enable post-capture calibration of the videos.

It will be appreciated that a smartphone may move during the capture. As such, calibration may need to be performed for each frame separately to find the movements of the smartphone camera during capture.

Once the videos are calibrated, they can be temporally synchronized using the temporal offsets determined as discussed above. If SfM algorithms are used for extrinsic calibration, feature points can also be extracted from the SfM algorithm. These 3D feature points can be used for dense depth estimation using either traditional matching algorithms or neural techniques based on deep learning. Thus, the now calibrated and synchronized videos can be used to synthesize a novel view for an immersive video.

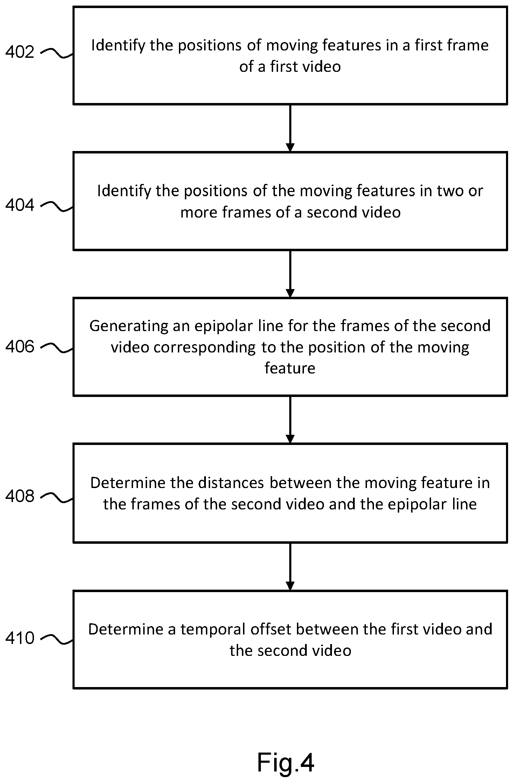

Fig. 4 shows a method of temporally synchronizing a first video and a second video of a scene. The first and second videos are captured from a first camera with a first pose and a second, different, camera with a second pose respectively. The method comprises identifying, in step 402, the positions of one or more moving features in a first frame of the first video and identifying, in step 404, the positions of said moving features in each of two or more frames of the second video. Epipolar lines are then generated, in step 406, for the two or more frames of the second video using the first and second camera poses, where the epipolar lines correspond to the positions of the moving features in the first frame of the first video.

For each of the two or more frames of the second video, distances between the positions of the moving features in the second video's frame and the corresponding epipolar lines are determined in step 408. Thus, a temporal offset between the first video and the second video can be determined in step 410 based on the determined distances.

Any method described herein may be computer-implemented, where computer-implemented means that the steps of said methods are performed by one or more computers and where a computer is defined as a device suitable for processing data. A computer may be suitable for processing data according to prescribed instructions.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

The computer program carrier may comprise computer memory (e.g., random-access memory) and/or computer storage (e.g., hard drives, solid-state drives etc.). The computer program carrier may be a bitstream carrying the computer program code.

A computer program code may be stored/distributed on a suitable medium, such as an optical storage medium or a solid-state medium supplied together with or as part of other hardware, but may also be distributed in other forms, such as via the Internet or other wired or wireless telecommunication systems.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

Any methods described herein exclude a method for performing mental acts as such.

**Claims**

1. A method of temporally synchronizing a first video and a second video of a scene, wherein the first and second videos are captured from a first camera pose and a second, different, camera pose respectively, the method comprising:

   identifying positions of one or more moving features in a first frame of the first video;
   identifying positions of said moving features in each of two or more frames of the second video;
   generating epipolar lines for the two or more frames of the second video corresponding to the positions of the moving features in the first frame of the first video using the first and second camera poses;
   for each of the two or more frames of the second video, determining distances between the positions of the moving features in the second video's frame and the corresponding epipolar lines; and
   determining a temporal offset between the first video and the second video based on the determined distances.

2. The method of claim 1, further comprising:

   identifying positions of one or more moving features in a second frame of the first video;
   generating epipolar lines for the two or more frames of the second video corresponding to the position of the moving features identified in the second frame of the first video using the first and second camera poses; and
   for each of the two or more frames of the second video, determining distances between the positions of the moving features in the second video's frame and the corresponding epipolar lines,
   wherein determining the temporal offset is further based on the distances between the positions of the moving features in the second video's frames and the corresponding epipolar lines.

3. The method of claims 1 or 2, further comprising:

   identifying positions of one or more moving features in each of two or more frames of a third video of the scene taken at a third camera pose;
   generating epipolar lines for the two or more frames of the third video corresponding to the positions of the moving features in the first frame of the first video using the first and third camera poses;
   generating epipolar lines for the two or more frames of the third video corresponding to the positions of the moving features in a frame of the second video using the second and third camera poses;
   for each of the two or more frames of the second video, determining distances between the positions of the moving features in the third video's frame and the corresponding epipolar line generated from the first frame of the first video;
   for each of the two or more frames of the second video, determining distances between the positions of the moving features in the third video's frame and the corresponding epipolar line generated from the frame of the second video;
   determining a second temporal offset between the first video and the third video based on the determined distances between the positions of the moving features in the third video's frames and the corresponding epipolar line generated from the first frame of the first video; and
   determining a third temporal offset between the second video and the third video based on the determined distances between the positions of the moving features in the third video's frames and the corresponding epipolar line generated from the frame of the second video.

4. The method of any of claims 1 to 3, wherein determining the temporal offset comprises determining a temporally closest frame of the second video, with respect to the first frame of the first video, based on the frame of the second video with the shortest sum of distances between the positions of the moving features in the second video's frames and the corresponding epipolar lines.

5. The method of claim 4, further comprising:

   identifying a temporally neighboring frame of the second video, with respect to the temporally closest frame, having at least one identified moving feature positioned on the other side of the corresponding epipolar line with respect to the identified moving feature in the temporally closest frame; and
   determining a sub-frame offset between the temporally closest frame of the second video and the first frame of the first video based on the magnitude of the distances corresponding to the temporally closest frame and the temporally neighboring frame.

6. The method of claim 5, further comprising adapting one or more of a first camera, used to obtain the first video, and a second camera, used to obtain the second video, based on the sub-frame offset such that the videos captured by the first camera and the second camera are temporally synchronized.

7. The method of any of claims 1 to 6, further comprising determining the first camera pose and the second camera pose within a world coordinate system based on one or more frames from the first video and one or more frames from the second video.

8. A method for temporally synchronizing a first video of a scene captured by a first smartphone at a first camera pose and a second video of the scene captured by a second smartphone at a second camera pose, the method comprising:

   determining whether the first and second videos were captured within a time threshold of each other; and
   based on the first and second videos being captured within the time threshold, performing all of the steps according to claim 7.

9. A computer program carrier comprising computer program code which, when executed on a computer, causes the computer to perform all of the steps according to any of claims 1 to 8.

10. A system for temporally synchronizing a first video and a second video of a scene, wherein the first and second videos are captured from a first camera pose and a second, different, camera pose respectively, the system comprising a processor configured to:

    identify positions of one or more moving features in a first frame of the first video;
    identify positions of said moving features in each of two or more frames of the second video;
    generate epipolar lines for the two or more frames of the second video corresponding to the positions of the moving features in the first frame of the first video using the first and second camera poses;
    for each of the two or more frames of the second video, determine distances between the positions of the moving features in the second video's frame and the corresponding epipolar lines; and
    determine a temporal offset between the first video and the second video based on the determined distances.

11. The system of claim 10, wherein the processor is further configured to:

    identify positions of one or more moving features in a second frame of the first video;
    generate epipolar lines for the two or more frames of the second video corresponding to the position of the moving features identified in the second frame of the first video using the first and second camera poses; and
    for each of the two or more frames of the second video, determine distances between the positions of the moving features in the second video's frame and the corresponding epipolar lines,
    wherein the processor is further configured to determine the temporal offset based on the distances between the positions of the moving features in the second video's frames and the corresponding epipolar lines.

12. The system of claims 10 or 11, wherein the processor is further configured to:

    identify positions of one or more moving features in each of two or more frames of a third video of the scene taken at a third camera pose;
    generate epipolar lines for the two or more frames of the third video corresponding to the positions of the moving features in the first frame of the first video using the first and third camera poses;
    generate epipolar lines for the two or more frames of the third video corresponding to the positions of the moving features in a frame of the second video using the second and third camera poses;
    for each of the two or more frames of the second video, determine distances between the positions of the moving features in the third video's frame and the corresponding epipolar line generated from the first frame of the first video;
    for each of the two or more frames of the second video, determine distances between the positions of the moving features in the third video's frame and the corresponding epipolar line generated from the frame of the second video;
    determine a second temporal offset between the first video and the third video based on the determined distances between the positions of the moving features in the third video's frames and the corresponding epipolar line generated from the first frame of the first video; and
    determine a third temporal offset between the second video and the third video based on the determined distances between the positions of the moving features in the third video's frames and the corresponding epipolar line generated from the frame of the second video.

13. The system of any of claims 10 to 12, wherein the processor is configured to determine the temporal offset by determining a temporally closest frame of the second video, with respect to the first frame of the first video, based on the frame of the second video with the shortest sum of distances between the positions of the moving features in the second video's frames and the corresponding epipolar lines.

14. The system of claim 13, wherein the processor is further configured to:

identify a temporally neighboring frame of the second video, with respect to the temporally closest frame, having at least one identified moving feature positioned on the other side of the corresponding epipolar line with respect to the identified moving feature in the temporally closest frame; and
determine a sub-frame offset between the temporally closest frame of the second video and the first frame of the first video based on the magnitude of the distances corresponding to the temporally closest frame and the temporally neighboring frame.

15. The system of claim 14, wherein the processor is further configured to adapt one or more of a first camera, used to obtain the first video, and a second camera, used to obtain the second video, based on the sub-frame offset such that the videos captured by the first camera and the second camera are temporally synchronized.

Fig.1

Fig.2

Fig.3

| | |
|---|---|
| 402 | Identify the positions of moving features in a first frame of a first video |

| | |
|---|---|
| 404 | Identify the positions of the moving features in two or more frames of a second video |

| | |
|---|---|
| 406 | Generating an epipolar line for the frames of the second video corresponding to the position of the moving feature |

| | |
|---|---|
| 408 | Determine the distances between the moving feature in the frames of the second video and the epipolar line |

| | |
|---|---|
| 410 | Determine a temporal offset between the first video and the second video |

Fig.4

Europäisches
Patentamt

European
Patent Office

Office européen
des brevets

# EUROPEAN SEARCH REPORT

Application Number

**EP 23 19 7101**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BENRHAIEM RANIA ET AL: "Achieving invariance to the temporal offset of unsynchronized cameras through epipolar point-line triangulation", MACHINE VISION AND APPLICATIONS, SPRINGER VERLAG, DE, vol. 27, no. 4, 21 April 2016 (2016-04-21), pages 545-557, XP035857203, ISSN: 0932-8092, DOI: 10.1007/S00138-016-0765-7 [retrieved on 2016-04-21] * pages 548-551; figure 7 * * page 555 * | 1-7,9-15 | INV. G11B27/10 G06T7/593 G06T7/73 |
| X | US 2021/295535 A1 (HAWKE EDWARD [GB]) 23 September 2021 (2021-09-23) * paragraphs [0030] - [0039], [0047] * | 1-4, 6-13,15 | |
| | | | TECHNICAL FIELDS SEARCHED (IPC) G11B G06T |

The present search report has been drawn up for all claims

| Place of search | Date of completion of the search | Examiner |
|---|---|---|
| The Hague | 13 February 2024 | Mourik, Piet |

EPO FORM 1503 03.82 (P04C01)

## ANNEX TO THE EUROPEAN SEARCH REPORT
## ON EUROPEAN PATENT APPLICATION NO.

EP 23 19 7101

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2024

| Patent document cited in search report | Publication date | Patent family member(s) | Publication date |
|---|---|---|---|
| US 2021295535 A1 | 23-09-2021 | EP 3882853 A1 | 22-09-2021 |
| | | GB 2593227 A | 22-09-2021 |
| | | US 2021295535 A1 | 23-09-2021 |

EPO FORM P0459

For more details about this annex : see Official Journal of the European Patent Office, No. 12/82